# EUROPÄISCHE PATENTANMELDUNG

(11) **EP 1 666 700 A2**
(43) Veröffentlichungstag der Anmeldung: **07.06.2006**
(21) Anmeldenummer: 05025615.5
(22) Anmeldetag: 24.11.2005
(51) Int. Cl.: F01D 25/24

(54) **Gasturbine**

(30) Priorität: 04.12.2004 DE 102004058487
(71) Anmelder: MTU Aero Engines GmbH, 80995 München (DE)
(72) Erfinder: Böck, Alexander, 82288 Kottgeisering (DE)

(57) **Zusammenfassung**

Die Erfindung betrifft eine Gasturbine, insbesondere ein Flugtriebwerk, mit einem Verdichter und einer Turbine, wobei der Verdichter sowie die Turbine jeweils einen Rotor sowie mit dem Rotor rotierende Laufschaufeln und ein feststehendes Gehäuse sowie feststehende Leitschaufeln aufweisen. Erfindungsgemäß sind dem Gehäuse (11) des Verdichters und/oder dem Gehäuse der Turbine jeweils mindestens zwei, in Umfangsrichtung versetzt zueinander angeordnete, Aktuatoren (14) zugeordnet, wobei jeder der Aktuatoren (14) ein Drehmoment um eine in etwa parallel zur jeweiligen Gehäuseachse verlaufende Achse (15) auf das jeweilige Gehäuse aufbringt, um so sich während des Betriebs der Gasturbine einstellende Deformationen des jeweiligen Gehäuses (11) zu kompensieren.

## Beschreibung

Die Erfindung betrifft eine Gasturbine, insbesondere für ein Flugtriebwerk, nach dem Oberbegriff des Anspruchs 1.

Gasturbinen, wie zum Beispiel Flugtriebwerke, verfügen neben einer Brennkammer über mindestens einen Verdichter sowie mindestens eine Turbine. Jeder Verdichter sowie jede Turbine der Gasturbine verfügt über jeweils einen Rotor sowie zusammen mit dem Rotor rotierende Laufschaufeln und ein feststehendes Gehäuse sowie ebenfalls feststehende Leitschaufeln. Der Rotor rotiert zusammen mit den Laufschaufeln gegenüber dem feststehenden Gehäuse sowie den feststehenden Leitschaufeln, wobei zwischen Rotor und Stator umlaufende Spalte ausgebildet sind, so zum Beispiel zwischen radial innenliegenden Ende der feststehenden Leitschaufeln sowie dem Rotor und den radial außenliegenden Enden der rotierenden Leitschaufeln und dem feststehenden Gehäuse. Zur Optimierung des Wirkungsgrads der Gasturbine müssen diese Spalte so minimal wie möglich gehalten werden.

Gasturbinen unterliegen während des Betriebs erheblichen Belastungen, die zu einer Deformation der Gehäuse von Verdichter und Turbine führen können. Bei Flugtriebwerken wird dies unter anderem durch die Einbausituation einer Triebwerksaufhängung und durch äußere Kräfte infolge von Manöverlasten hervorgerufen. Bei einwandigen Gehäusen für Verdichter und Turbine übertragen sich diese Deformationen unmittelbar auf die abzudichtenden Spalte zwischen dem Rotor und dem Stator. Um dem entgegenzuwirken, werden nach dem Stand der Technik die Gehäuse von Verdichter und Turbine aufgedickt bzw. versteift, was jedoch ein höheres Gewicht für die Gasturbine bedeutet. Des weiteren erhöhen sich durch ein vergrößertes Gewicht der Gasturbine die Kosten, der Wirkungsgrad der Gasturbine wird verschlechtert.

Hiervon ausgehend liegt der vorliegenden Erfindung das Problem zu Grunde eine neuartige Gasturbine zu schaffen.

Dieses Problem wird durch eine Gasturbine im Sinne des Anspruchs 1 gelöst. Erfindungsgemäß sind dem Gehäuse des Verdichters und/oder dem Gehäuse der Turbine jeweils mindestens zwei, in Umfangsrichtung versetzt zueinander angeordnete Aktuatoren zugeordnet, wobei jeder der Aktuatoren ein Drehmoment um eine in etwa parallel zur jeweiligen Gehäuseachse verlaufende Achse auf das jeweilige Gehäuse aufbringt, um so sich während des Betriebs der Gasturbine einstellende Deformationen des jeweiligen Gehäuses zu kompensieren.

Im Sinne der hier vorliegenden Erfindung wird vorgeschlagen, den sich während des Betriebs der Gasturbine einstellenden Gehäusedeformationen durch Aktuatoren entgegenzuwirken, die zur Kompensation der Deformationen Drehmomente auf das Gehäuse übertragen. Im Sinne der hier vorliegenden Erfindung können demnach Deformationen des Gehäuses von Verdichter und Turbine über eine aktive Regelung der Aktuatoren ausgeglichen werden. Mit der Erfindung können auch bei einem dünnwandigen Gehäuse Spalte zwischen einem Rotor und einem Stator eines Verdichters oder auch einer Turbine minimal gehalten werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen ausschnittsweisen Längsschnitt durch einen Verdichter einer erfindungsgemäßen Gasturbine;
- Fig. 2: ein Detail der Anordnung gemäß Fig. 1 in Blickrichtung II;
- Fig. 3: einen gegenüber Fig. 1 versetzten Längsschnitt durch den Verdichter der erfindungsgemäßen Gasturbine;
- Fig. 4: eine schematisierte Darstellung zur Verdeutlichung des Funktionsprinzips der hier vorliegenden Erfindung;
- Fig. 5: eine weitere schematisierte Darstellung zur Verdeutlichung des Funktionsprinzips der hier vorliegenden Erfindung; und
- Fig. 6: eine weitere schematisierte Darstellung zur Verdeutlichung des Funktionsprinzips der hier vorliegenden Erfindung.

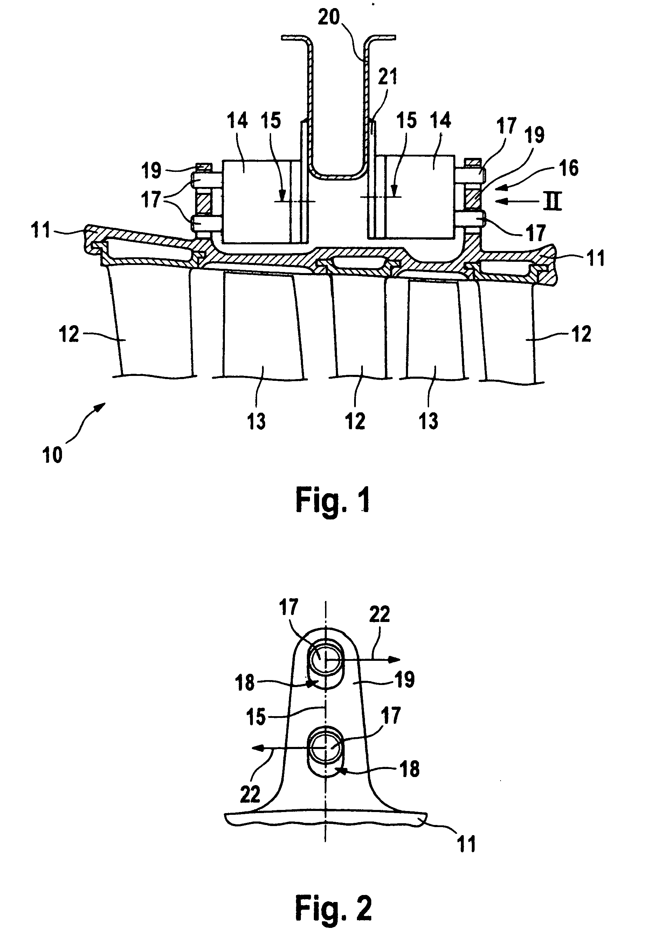

Nachfolgend wird die Erfindung unter Bezugnahme auf Fig. 1 bis 6 in größerem Detail beschrieben.

Fig. 1 zeigt einen teilweisen Längsschnitt durch einen Verdichter 10 einer Gasturbine. Der Verdichter 10 verfügt über ein feststehendes Gehäuse 11, wobei am feststehenden Gehäuse 11 feststehende Leitschaufeln 12 gelagert sind. Gegenüber dem feststehenden Gehäuse 11 sowie den ebenfalls feststehenden Leitschaufeln 12 rotieren Laufschaufeln 13, die an einem nicht-dargestellten Rotor gelagert sind.

Während des Betriebs der Gasturbine kann sich das Gehäuse 11 zum Beispiel aufgrund von Manöverlasten deformieren. Im Sinne der hier vorliegenden Erfindung wird nun vorgeschlagen, dass dem Gehäuse 11 mindestens zwei in Umfangsrichtung versetzt zueinander angeordnete Aktuatoren 14 zugeordnet sind, wobei die in Umfangsrichtung versetzt zueinander angeordneten Aktuatoren 14 jeweils ein Drehmoment um eine in etwa parallel zur jeweiligen Gehäuseachse verlaufende Achse 15 aufbringen, um so die Gehäusedeformationen zu kompensieren. In der Darstellung der Fig. 1 bilden die Aktuatoren 14 in Umfangsrichtung versetzt zueinander angeordnete Aktuatorenpaare 16, wobei an mindestens zwei Umfangspositionen des Gehäuses 11 jeweils zwei in axialer Richtung hintereinander angeordnete Aktuatoren 14 ein Aktuatorpaar 16 bilden. In Fig. 1 ist lediglich ein Aktuatorpaar 16 mit zwei in axialer Richtung hintereinander angeordneten Aktuatoren 14 gezeigt.

Im Ausführungsbeispiel der Fig. 1 verfügt jeder Aktuator 14 über zwei Aktuatorbolzen 17. Jeder Aktuator 14 greift mit seinen beiden Aktuatorbolzen 17 in Bohrungen 18 eines Flansches 19 ein, wobei die Flansche 19 integraler Bestandteil des Gehäuses 11 sind. An einem den Aktuatorbolzen 17 gegenüberliegenden Ende sind die Aktuatoren 14 an einem um das Gehäuse 10 umlaufenden Träger 20 befestigt. Im bevorzugten Ausführungsbeispiel der Fig. 1 sind beide Aktuatoren 14 eines jeden Aktuatorpaars 16 über Laschen 21 an einem gemeinsamen Träger 20 starr befestigt. Die Aktuatorbolzen 17 der Aktuatoren 14 eines jeden Aktuatorpaars 16 sind zu beiden Seiten des Trägers 20 jeweils in einem Flansch 19 gelagert. Jeder Aktuator 14 ist demnach einerseits an einem an einer Außenseite des Gehäuses befestigten Flansch 19 und andererseits an einem um das Gehäuse umlaufenden Träger 20 gelagert. Gemäß Fig. 1 und 2 sind die Bohrungen 18 des Flansches 19, in welche die Aktuatorbolzen 17 eingreifen, in radialer Richtung voneinander beabstandet und in radialer Richtung als Langlöscher ausgebildet. Bedingt dadurch, dass die Bohrungen 18 als Langlöscher ausgebildet sind, können thermische Dehnungen des Gehäuses 11 ausgeglichen werden.

Wie bereits erwähnt, bringt jeder der Aktuatoren 14 zur Kompensation von Gehäusedeformationen über ein Kräftepaar ein Drehmoment auf das Gehäuse 11 auf. Hierzu bringt jeder der Aktuatorbolzen 17, wie Fig. 2 entnommen werden kann, eine Kraft auf die Flansche 19 des Gehäuses 11 auf, wobei die durch die Aktuatorbolzen 17 eines jeden Aktuators 14 aufgebrachten Kräfte in entgegengesetzter Richtung wirken und vom Betrag gleichgroß sind. Die durch die Aktuatorbolzen 17 bereitgestellten Kräfte sind in Fig. 2 durch Pfeile 22 visualisiert.

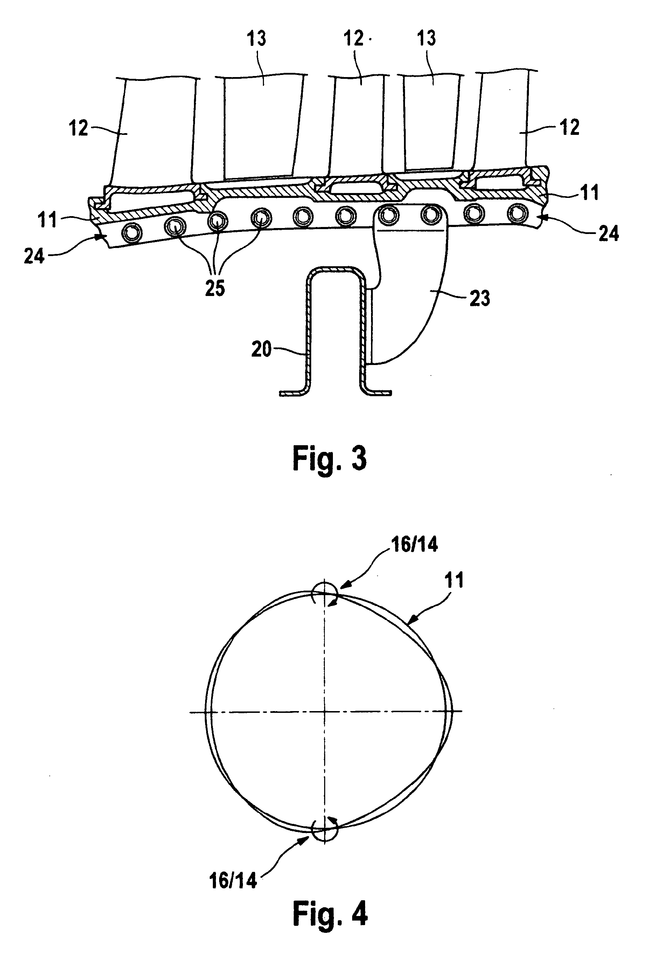

In einer Ausführungsform der hier vorliegenden Erfindung sind am Umfang des Gehäuses 11 zwei Aktuatorpaare 16 aus jeweils zwei in Axialrichtung versetzten Aktuatoren 14 in Umfangsrichtung des Gehäuses 11 derart voneinander beabstandet, dass sich die beiden Aktuatorpaare 16 diametral gegenüberliegen. Die beiden sich diametral gegenüberliegenden Aktuatorpaare 16 bringen Drehmomente auf das Gehäuse 11 auf, die vorzugsweise in entgegengesetzten Richtungen wirken. So zeigt Fig. 4 stark schematisiert ein Gehäuse 11, dem an diametral gegenüberliegenden Positionen, nämlich oben und unten, jeweils ein Aktuatorpaar 16 aus zwei Aktuatoren 14 zugeordnet ist. Ein durch das obere Aktuatorpaar 16 aufgebrachtes Drehmoment wirkt im Uhrzeigersinn, das durch das untere Aktuatorpaar 16 aufgebrachte Drehmoment wirkt entgegengesetzt zum Uhrzeigersinn. Hierdurch kann das Gehäuse 11 zur Kompensation von Gehäusedeformationen auf die in Fig. 4 gezeigte Art und Weise verformt werden, wobei gemäß Fig. 4 das Gehäuse 11 durch auf der linken Seite gegenüber der kreisrunden Form abgeflacht und auf der rechten Seite ausgewölbt wird.

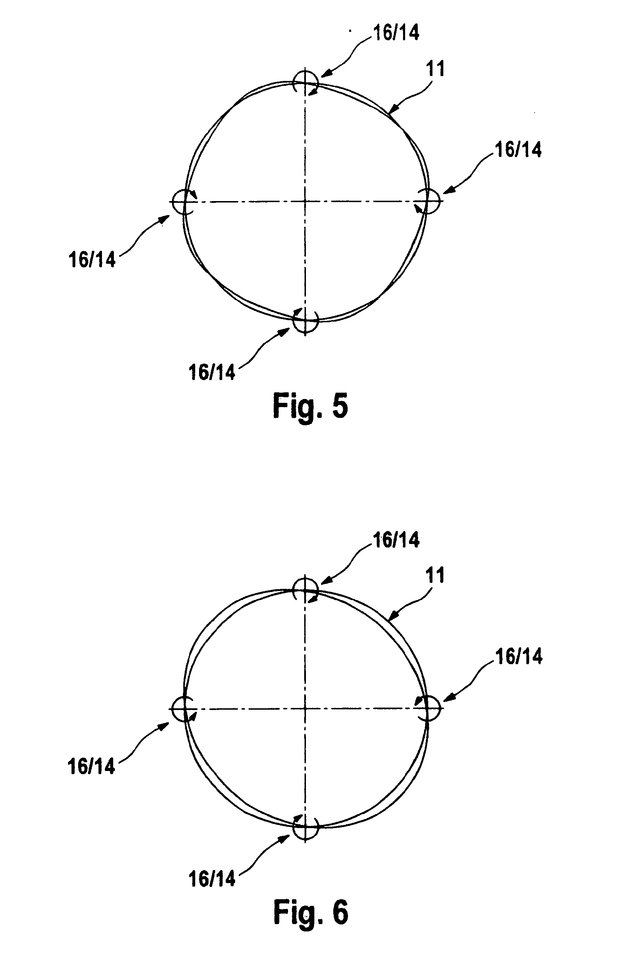

Nach einer weiteren Ausgestaltung der hier vorliegenden Erfindung sind am Umfang des Gehäuses 11 vier Aktuatorpaare 16 aus jeweils zwei Aktuatoren 14 gleichverteilt angeordnet, wobei sich jeweils zwei der vier Aktuatorpaare 16 diametral gegenüberliegen. Dies kann den Darstellungen gemäß Fig. 5 und 6 entnommen werden. In der Ausführungsform der Fig. 5 wirken alle durch die Aktuatorpaare 16 bereitgestellten Drehmomente in der selben Richtung, nämlich im Uhrzeigersinn. Hierdurch kann das Gehäuse 11 zur Kompensation von Gehäusedeformationen auf die in Fig. 5 dargestellte Art und Weise verformt werden, nämlich in Form einer Art Quadratur. In der Ausführungsform der Fig. 6 bringen sich diametral gegenüberliegende Aktuatorpaare 16 wiederum in gleicher Richtung wirkende Drehmomente auf das Gehäuse 11 auf, wobei die sich nicht diametral gegenüberliegenden Aktuatorpaare entgegengesetzt wirkende Drehmomente auf das Gehäuse 11 aufbringen. So wirken in der Ausführungsform der Fig. 6 die Drehmomente des oberen sowie unteren Aktuatorpaars im Uhrzeigersinn, die Drehmomente des linken sowie rechten Aktuatorpaars wirken entgegengesetzt zum Uhrzeigersinn. Fig. 6 zeigt die hierdurch erzielbare Deformation, die einer Art Ovalisierung entspricht.

Obwohl Fig. 4 bis 6 lediglich Ausführungsbeispiele mit zwei sowie vier Aktuatorpaaren zeigen, die um den Umfang des Gehäuses 11 gleichverteilt angeordnet sind, sind auch Ausführungsformen denkbar, in denen drei oder mehr als vier Aktuatorpaare bzw. Aktuatoren um den Umfang des Gehäuses 11 gleichverteilt positioniert sind. Die Auswahl der Anzahl an Aktuatoren bzw. Aktuatorpaaren sowie die Anordnung derselben entlang des Umfangs des Gehäuses 11 hängt von den im Betrieb zu erwartenden Deformationen des Gehäuses 11 ab, die mit den Aktuatoren 14 bzw. den Aktuatorenpaaren 16 in Sinne einer aktiven Regelung kompensiert werden sollen. Neben den Aktuatoren ist daher dem Gehäuse 11 vorzugsweise auch mindestens ein Sensor zugeordnet, der die sich im Betrieb der Gasturbine einstellende Deformation des Gehäuses 11 überwacht und entsprechende Messergebnisse an eine Regeleinrichtung übermittelt, die dann zur Kompensation der Gehäusedeformationen Stellsignale für die Aktuatoren 14 erzeugt.

Wie bereits im Zusammenhang mit Fig. 1 ausgeführt, sind alle Aktuatoren 14 mit dem um das Gehäuse 11 umlaufenden Träger 20 fest verbunden. In der Ausführungsform der Erfindung, in der mindestens drei Aktuatoren 14 bzw. Aktuatorpaare 16 vorzugsweise gleichverteilt um den Umfang des Gehäuses 11 positioniert sind, ist keine weitere Befestigung des Trägers 20 am Gehäuse 11 erforderlich. Die Aktuatoren 14 bzw. Aktuatorpaare 16 stellen dann einen sogenannte Selbstzentrierung für den Träger 20 bereit. In dem Fall, in dem lediglich zwei Aktuatoren 14 bzw. Aktuatorpaare 16 um den Umfang des Gehäuses 11 positioniert sind, ist der Träger 20 gemäß Fig. 3 über eine Aufhängung 23 mit dem Gehäuse 11 elastisch verbunden. Im Ausführungsbeispiel der Fig. 3 greift die elastische Aufhängung 23 im Bereich einer Trennfuge 24 des Gehäuses 11 an. Im Bereich solcher Trennfugen 24 sind Gehäuseteile mehrteiliger Gehäuse über Schraubverbindungen 25 miteinander verbunden. Liegt ein einteiliges Gehäuse vor, so kann die Aufhängung 23 an einem Flansch des Gehäuses angeschraubt werden.

Zur Kompensation von sich während des Betriebs ausbildenden Gehäusedeformationen wird im Sinne der hier vorliegenden Erfindung vorgeschlagen, um ein Gehäuse mehrere Aktuatoren entlang des Umfangs desselben zu positionieren. Mit den Aktuatoren sind Drehmomente auf das Gehäuse ausübbar, nämlich um eine parallel zur Gehäusachse verlaufende Achse. Die von den Aktuatoren oder Aktuatorpaaren bereitgestellten Drehmomente können in entgegengesetzter Richtung oder in gleicher Richtung wirken. Des weiteren können die von den entlang des Umfangs des Gehäuses angeordneten Aktuatoren bzw. Aktuatorpaaren erzeugten Drehmomente gleichstark oder unterschiedlich stark ausgeprägt sein. Hierdurch ist ein Verwölben des Gehäuses in verschiedensten Formen möglich, und zwar mit dem Ziel, um während des Betriebs auftretenden Deformationen entgegenzuwirken bzw. dieselben zu kompensieren. Hierdurch ist es möglich, bei dünnwandigen Gehäusen trotz auf dieselben einwirkender Kräfte geringe Laufspalte zwischen dem Rotor und dem Stator einzuhalten. Hierdurch können bei geringem Gewicht der Gasturbine hohe Wirkungsgrade erzielt werden.

## Patentansprüche

1. Gasturbine, insbesondere Flugtriebwerk, mit einem Verdichter und einer Turbine, wobei der Verdichter sowie die Turbine jeweils einen Rotor sowie mit dem Rotor rotierende Laufschaufeln und ein feststehendes Gehäuse sowie feststehende Leitschaufeln aufweisen,
**dadurch gekennzeichnet,**
**dass** dem Gehäuse (11) des Verdichters und/oder dem Gehäuse der Turbine jeweils mindestens zwei, in Umfangsrichtung versetzt zueinander angeordnete, Aktuatoren (14) zugeordnet sind, wobei jeder der Aktuatoren (14) ein Drehmoment um eine in etwa parallel zur jeweiligen Gehäuseachse verlaufende Achse (15) auf das jeweilige Gehäuse aufbringt, um so sich während des Betriebs der Gasturbine einstellende Deformationen des jeweiligen Gehäuses (11) zu kompensieren.

2. Gasturbine nach Anspruch 1,
**dadurch gekennzeichnet,**
**dass** jeder Aktuator (14) einerseits an einem an einer Außenseite des jeweiligen Gehäuses (11) befestigten Vorsprung bzw. Flansch (19) und anderseits an einem das jeweilige Gehäuse (11) teilweise umschließenden bzw. umlaufenden Träger (20) gelagert ist.

3. Gasturbine nach Anspruch 2,
**dadurch gekennzeichnet,**
**dass** jeder Aktuator (14) mindestens zwei Aktuatorbolzen (17) aufweist, die in Bohrungen (18) des jeweiligen Flansches (19) eingreifen bzw. in diesen gelagert sind.

4. Gasturbine nach Anspruch 3,
**dadurch gekennzeichnet,**
**dass** die Bohrungen (18) als sich in radialer Richtung erstreckende Langlöcher ausgebildet sind.

5. Gasturbine nach Anspruch 3 oder 4,
**dadurch gekennzeichnet,**
**dass** jeder Aktuator (14) an einem den Aktuatorbolzen (17) desselben gegenüberliegenden Ende an dem umlaufenden Träger (20) befestigt ist.

6. Gasturbine nach einem oder mehreren der Ansprüche 1 bis 5,
**dadurch gekennzeichnet,**
**dass** die Aktuatoren (14) in Umfangsrichtung versetzt zueinander angeordnete Aktuatorpaare (16) bilden, derart, dass an mindestens zwei Umfangspositionen des Gehäuses jeweils zwei in axialer Richtung hintereinander angeordnete Aktuatoren (14) positioniert sind.

7. Gasturbine nach Anspruch 6,
**dadurch gekennzeichnet,**
**dass** die Aktuatoren (14) jedes Aktuatorpaars (16) einerseits an jeweils einem Flansch (19) und anderseits gemeinsam an dem umlaufenden Träger (20) gelagert ist.

8. Gasturbine nach einem oder mehreren der Ansprüche 1 bis 7,
**dadurch gekennzeichnet,**
**dass** am Umfang des jeweiligen Gehäuses zwei Aktuatoren oder zwei Aktuatorpaare diametral gegenüberliegend angeordnet sind, die entgegengesetzt wirkende Drehmomente auf das jeweilige Gehäuse aufbringen.

9. Gasturbine nach einem oder mehreren der Ansprüche 1 bis 7,
**dadurch gekennzeichnet,**
**dass** am Umfang des jeweiligen Gehäuses vier Aktuatoren oder vier Aktuatorpaare gleichverteilt angeordnet sind, wobei sich jeweils zwei der vier Aktuatoren oder Aktuatorpaare diametral gegenüberliegen, und wobei die sich diametral gegenüberliegenden Aktuatoren oder Aktuatorpaare gleich wirkende Drehmomente auf das jeweilige Gehäuse aufbringen.

10. Gasturbine nach einem oder mehreren der Ansprüche 1 bis 9,
**dadurch gekennzeichnet,**
**dass** der Träger (20) mit den Aktuatoren (14) starr verbunden ist.

11. Gasturbine nach einem oder mehreren der Ansprüche 1 bis 10,
**dadurch gekennzeichnet,**
**dass** der Träger (20) mit dem jeweiligen Gehäuse (11) elastisch verbunden ist.
